# EUROPEAN PATENT SPECIFICATION

(11) **EP 2 733 449 B1**
(45) Date of publication and mention of the grant of the patent: **11.03.2020**
(21) Application number: 13178358.1
(22) Date of filing: 29.07.2013
(51) Int. Cl.: G05B 19/042, F25D 23/10, F24C 7/08, F24C 14/02, F24C 15/30

(54) **Household Appliance with a Detection System for an Ambient Condition**
Haushaltsgerät mit Umgebungsbedingungserkennungssystem
Appareil ménager avec système de détection d'une condition ambiante

(30) Priority: 16.11.2012 EP 12193014; 11.07.2013 EP 13176010
(43) Date of publication of application: 21.05.2014
(73) Proprietor: Electrolux Home Products Corporation N.V., 1130 Brussels (BE)
(72) Inventor: Feser, Jürgen, 91541 Rothenburg ob der Tauber (DE); Dänzer, Stefan, 91541 Rothenburg ob der Tauber (DE); Benold, Frank, 33080 Porcia (PN) (IT); Kessler, Martin, 91541 Rothenburg ob der Tauber (DE)
(74) Representative: Electrolux Group Patents

(56) References cited:
- EP-A2- 2 474 799
- WO-A1-2012/032460
- WO-A1-2012/112057
- US-A- 4 387 578
- US-A1- 2009 001 069
- US-B1- 6 415 552
- US-B1- 6 722 142

## Description

The present invention relates to a household appliance according to the preamble of claim 1 and to a method of operating such a household appliance according to the preamble of claim 14.

Household appliances comprising a control unit and means for detecting an ambient condition wherein said means are connected to the control unit are known in the prior art. JP 02-274288 discloses a washing machine that can be switched to a night driving program when the circumference is dark. A microcomputer automatically changes a standard course to a night course to execute the set program. EP 1 887 443 A1 discloses a home appliance like a dishwasher, a dryer, or a washing machine wherein by means of an ambient condition sensor a control unit adapts the program sequences in dependency of such an ambient sensor signal. The ambient sensor can be an optical detector, a noise detector, a vibration detector or a motion detector. The intention is to provide for a home appliance which adapts the noise generation according to the ambient conditions. Hence, the noise emission can be reduced during the night or when the kitchen light is switched-off (darkness) or when the user is sleeping (no movement).

US 4,387,578 A and EP 2 474 799 A2 disclose refrigerators comprising means for detecting an open door condition of the refrigerator door. WO 2012/112057 A1 discloses a refrigerator which is able to detect a customer.

In the kitchen industry there is a trend to follow the show and hide principle. This means that the household appliances are more or less hidden. Examples are laundry washing machines, tumble dryers or refrigerators comprising a door for loading wherein the loading door is coupled to or hidden behind a door of a housing of piece of kitchen furniture. However, it is potentially dangerous to hide a household appliance producing a significant heat emission, especially such like an oven or a cooking hob, respectively behind or below a furniture housing door or shutter. The risk is particularly high, if a cooking hob is arranged below a door or shutter of a surrounding or neighbouring kitchen furniture, such as e.g. a worktop or a cover made of wood or polymere. The risk is also particularly high in the case of an oven, especially if an oven that comprises a pyrolytic cleaning operation mode is arranged inside a furniture compartment behind a closed door or shutter thereof. During pyrolytic cleaning the oven cavity is heated up to about 500 °C until food soils on the cavity wall have been burned to ashes. During and after pyrolytic cleaning the oven's ventilation system leads high amounts of heat to the external ambience of the oven. If the furniture housing door or shutter is in its closed state even a switched-off but still warm or hot household appliance might damage the furniture. In addition, in a switched-off oven not only the heating elements of the oven are switched-off but also the ventilation system of the oven stops and the cooling of the components within the oven is stopped. As a result for a certain period of time the temperature within the oven and around the oven inside the furniture cabinet will even be rising which might not only damage the oven, in particular the oven's electronic, but also the furniture around the oven. In an extreme case such a situation could even cause a fire, in particular in the case of an oven or a cooking hob, and especially in the case of a pyrolytic oven.

It is therefore an object of the present invention to provide a household appliance wherein the aforementioned disadvantages are overcome.

The invention is defined in claim 1 and in claim 14, respectively.

Particular embodiments are set out in the dependent claims and are described with reference to the enclosed drawing in the following.

According to a first aspect of the invention a household appliance is provided, in particular an oven, a cooking hob, a refrigerator, a freezer, a dishwasher, a washing machine or a tumble dryer, that comprises a control unit and means for detecting an ambient condition outside of the household appliance that are connected in signal communication to the control unit, wherein the means for detecting an ambient condition are provided for detecting whether the household appliance is in a sealed ambient condition, in a non-sealed ambient condition or in a transition state from a non-sealed to a sealed ambient condition and to communicate said sealed or non-sealed ambient condition or said transition state to the control unit, wherein the control unit is adapted to switch the household appliance from a running operation mode into a second operation mode wherein a heat emission of appliance is reduced in comparison to the running operation mode or to start the household appliance in said second operation mode and wherein the control unit is adapted to output an alarm signal to a user of the household appliance, when a sealed ambient condition or a transition state from a non-sealed to a sealed ambient condition is detected by said means for detecting an ambient condition. Preferably, the household appliance is adapted to treat goods with heat, such as an oven, a cooking hob, a tumble dryer, a washing machine or a dishwasher, preferably it is or comprises a cooking hob or an oven, still preferably an oven with a pyrolytic cleaning operation mode.

In the following, an ambient condition wherein a household appliance is mounted or arranged inside a substantially sealed housing of a piece of furniture behind a door or shutter of the furniture so as to hide the appliance while the furniture door or shutter is in its closed state, is referred to as the "sealed ambient condition". On the other hand, the open state of the door or shutter of the furniture housing wherein the household appliance is arranged is referred to as the "non-sealed ambient condition". Further, a situation wherein the furniture housing door or shutter is being closed or is halted in between these two states is referred to as the "transition state from a non-sealed to a sealed ambient condition". Hence, the situation where the furniture housing door or shutter is in a motion from an open state towards a closed state or is stopped in between these two states refers to this "transition state from a non-sealed to a sealed ambient condition". In a preferred embodiment of the invention, the control unit of the household appliance is adapted to identify at least two of said sealed ambient condition, non-sealed ambient condition and transition state from a non-sealed to a sealed ambient condition basing on said signal communication with said means for detecting an ambient condition outside of the household appliance. Following this definition the fact that a household appliance is arranged within a closed room of a building like a kitchen or within a building or is boxed or packaged in a packing should not be understood as a "sealed ambient condition".

According to the invention, an arrangement of a household appliance inside a substantially sealed furniture housing shall be understood as (i) in the case of a household appliance that comprises an internal treatment chamber such as an oven, a refrigerator, a freezer, a dishwasher, a washing machine or a tumble dryer an arrangement of said household appliance inside a piece of furniture such as typically a compartment or cabinet of a kitchen furniture which comprises a frontal closing door or shutter that substantially inhibits sufficient heat exchange between the household appliance and the atmosphere. Further in accordance with the present invention, an arrangement of a household appliance inside a substantially sealed furniture housing shall be understood as (ii) in the case of a household appliance that comprises an external heating surface such as a cooking hob, e.g. a glass ceramic hob or a teppan yaki, an arrangement of said household appliance inside a piece of furniture such as typically a work top of a kitchen furniture which comprises a top closing door or shutter that substantially covers said external heated surface such as a cooking hob or teppan yaki and inhibits sufficient heat exchange with the atmosphere.

In the case of above (i), said furniture housing can typically comprise two side walls, a rear wall, a top wall and a bottom wall as well as a front door or shutter that can be opened in order to provide access to the households appliance, and in particular to provide access to a front loading door of an oven, a refrigerator, a freezer, a dishwasher, a washing machine or a tumble dryer. Any of said side walls, top wall, bottom wall and/or rear wall may either be part the furniture housing itself or can be provided at least in part by a neighboring piece of furniture or by a wall, a floor or a ceiling of a building's room comprising said furniture, such as e.g. a neighboring piece of furniture or room wall at the left and/or right of the furniture housing; a piece of furniture or a room floor below the furniture housing; a piece of furniture, in particular a work top or a cabinet, or a room ceiling above the furniture housing; a piece of furniture or a room wall behind the furniture housing. Whereas the dimensions of the furniture housing are sufficient to allow the arrangement of the household appliance inside it, all or most of its side, rear, bottom and top walls can have a distance to the household appliance that is typical of the arrangement of a household appliance inside a kitchen furniture niche that is known per se in the prior art as a kitchen niche for building-in or building-under of household appliances. However, the present invention differs importantly from such a prior art kitchen niche for built-in or built-under that either is essentially open on its front side or comprises ventilation openings and/or a door or a curtain that are adapted to allow sufficient heat exchange between the atmosphere and a household appliance that is of a type that emits relatively low amounts of heat, such as a washing machine, a refrigerator or dishwasher. Divergently, the present invention refers to the arrangement of a household appliance of any heat generation level inside a substantially sealed furniture housing that does not comprise sufficient ventilation openings and that comprises a door or shutter which in its closed state substantially blocks sufficient heat exchange with the atmosphere. Accordingly, the dimensions of the furniture housing in its state with its front door or shutter closed and the relative part of the closed surface of its walls and its door or shutter with respect to the dimensions of the household appliance are typically such that in the closed state of the furniture compartment door or shutter the furniture housing can be considered as substantially sealed as regards the sufficient exchange of the heat emitted by the household appliance during its operation with the atmosphere.

In the case of above (ii), said furniture housing can typically comprise a work top of a kitchen furniture that comprises a cut out of corresponding dimensions as the cooking hob and wherein the cooking hob is arranged inside said cutout as in a frame. The furniture housing typically provides ventilation of the cooking hob from below as required already in the prior art by the cooking hob manufacturer in order to ensure the lifetime of the cooking hob electronics. However, said ventilation of the prior art from below the cook top is not suitable for providing the effect of the present invention which ensures that the heated top surface of a cooking top which is adapted to heating cooking vessels - or in the case of a teppan yaki to directly cook food stuff by frying - can be savely covered and hidden from with a furniture door or shutter by a user without taking any care of the operation state of the cooking hob. The door or shutter of a furniture housing that can cover a cooking top can typically be for example a counter top or chopping board that can be shifted over or folded down onto the cooking hob in order to at least partially cover or even completely hide it. It can preferably be made to match a surrounding worktop. Still preferably, the cooking hob can be arranged within a vertical recess of a kitchen furniture worktop that can be closed sideways or from above with a door or shutter that matches the surrounding worktop, in particular wherein the door or shutter can be level with the surrounding worktop in its closed state.

Thus, according to preferred embodiments of the invention, the sealed ambient condition can be defined by a substantially sealed furniture housing wherein the appliance can be arranged and which comprises a door or shutter that can be opened for providing access to the household appliance and closed for hiding the household appliance inside said furniture housing, wherein in the sealed ambient condition the door or shutter of the furniture housing is in a closed state, in the non-sealed ambient condition the door or shutter of the furniture housing is an open state, and in the transition state the door or shutter of the furniture housing is in an at least partially closed state.

According to the invention, the household appliance is adapted to detect itself whether it is in a sealed ambient condition, e.g. arranged inside a housing of piece of furniture wherein a furniture housing door or shutter for accessing the household appliance is in its closed state or is being closed. The control unit of the household appliance is adapted to switch the household appliance from a running operation mode which is usually applied under non-sealed ambient conditions into a second operation mode, wherein in the second operation mode a heat emission of the appliance is reduced. Especially but not exclusively in the case of an oven or a cooking hob, the heating elements thereof can preferably be regulated down or switched-off. In alternative, the control unit can also be adapted to start the household appliance in said second operation mode. The latter can be useful in cases wherein a starting of the household appliance has been programmed with a time delay, however a sealed ambient condition is generated subsequently, e.g. by the closing the furniture door or shutter. Under these conditions the household appliance can still be started, however only in the second operation mode with a reduced heat emission.

In addition to the switching to the second operation mode the control unit can also output an alarm signal, such as an optical signal (lamp, LED, message on a display) or an acoustical alarm so as to inform a user of the household appliance that a sealed ambient condition has been detected. Then the user of the household appliance can "un-seal" the household appliance by opening the door or shutter of the furniture housing. It is hence a benefit of the present invention that it can be detected whether the household appliance is in a sealed ambient condition which requires appropriate countermeasures either by the control unit of the household appliance to respond to such an unforeseen and potentially unsafe situation or by the user, e.g. by opening a furniture housing door or shutter or by switching off the household appliance. A further benefit is the fact that a household appliance according to the present invention can react independently of a piece of furniture wherein the household appliance is integrated.

Preferably, the control unit of the household appliance that is in signal communication with said means for detecting an ambient condition outside of the household appliance is adapted to identify at least two of said sealed ambient condition, non-sealed ambient condition and transition state from a non-sealed to a sealed ambient condition of the household appliance that is arranged inside said furniture housing basing on the signals that the control unit receives from said means for detecting an ambient condition. In that way, the control unit can evaluate by comparison which of said at least two ambient conditions prevails presently outside of the household appliance.

The present invention provides the important innovation to effectively avoid any need to adapt the furniture of a kitchen or any other room to the installation of the household appliance of the invention into a housing of said furniture. The furniture housing may comprise a substantially sealing door or shutter and the invention allows that a user can safely close the furniture door or shutter without taking care during the operation of the household appliance. In a particular embodiment of the invention, the household appliance needs not to be switched-off completely in a sealed ambient condition but it can carry on running in the second operation mode with reduced heat emission, preferably wherein in addition specific measures like a cooling or a ventilation of the household appliance can still be provided in the sealed ambient condition.

In preferred embodiments of the household appliance the means for detecting an ambient condition comprise at least one of the following detection systems or a combination thereof. An infrared or capacitive or ultra-sonic detection system can be provided which is adapted for distance measurements in particular for measuring a distance between the domestic appliance that is arranged inside the furniture housing and the door or shutter of the furniture housing. Such distance detection systems are known as such in the prior art. An infrared detection system is based on the reflection of infrared radiation emitted e.g. by an IR-LED provided on the household appliance. The infrared light that is reflected back to the household appliance, e.g. by the inner side of the door or shutter of a furniture housing surrounding or covering the household appliance, is detected by means of a detection system or sensor which is preferably also provided on the household appliance. A similar approach is the use of an ultra-sonic detection system being based on ultra-sonic acoustical waves instead of infrared light. In case of a capacitive distance detection system or distance measuring system the distance or the approaching of a conducting or nonconducting body (in this case the furniture housing door or shutter) is used to change the electrical capacity of a sensor circuit. A Reed contact-based detection system can also be used for movement detection, in particular for measuring a distance between the domestic appliance that is arranged inside the furniture housing and the door or shutter of the furniture housing. Such a Reed switch or Reed relay comprises an electrical switch operated by an applied magnetic field. The magnetic field can be generated by a magnet which can be attached to a door or shutter of the furniture housing. Another, light-based detection system that can be used comprises a photodiode which is adapted to detect ambient light, in particular for detecting an ambient light level inside the furniture housing. Such a photodiode is able to detect whether a furniture housing door or shutter is in its closed state and / or whether the light in a kitchen is switched on or off and / or whether it is night, wherein in the latter case a particularly silent operation mode of the household appliance can be switched on, a so-called "night-cycle".

Also a RFID detection system can be used for detecting a RFID tag, in particular for detecting the distance between a RFID tag that is arranged on the door or shutter of the furniture housing relative to the domestic appliance that is arranged inside the furniture housing, or vice versa. Here, a RFID tag (radio frequency identification tag) is used for wireless communication by means of radio-frequency electromagnetic fields. A tag attached to the furniture door or shutter can be read by a reader provided on the household appliance, wherein the reader acts also as a local power source for the RFID tag. Since RFID communication is limited to several centimeters it can hence be detected whether a furniture housing door or shutter is in its closed state or is open.

Preferably, it is possible to detect or measure absolute values or changes in detector signal.

Whereas the above-mentioned detection systems are able to directly detect an ambient condition outside of the household appliance, e.g. the position of a furniture housing door or shutter, also detection systems can be used which detect said ambient condition more indirectly. According to a preferred embodiment of the present invention such an indirect detection can be performed by detecting an internal parameter of the household appliance that can be assigned to a sealed or to a non-sealed ambient condition outside of the household appliance that is arranged inside the furniture housing. "Internal" means that the detection system measures or detects the activities of the household appliance itself rather than the external surroundings of the household appliance.

According to a preferred embodiment of the present invention of an indirect detection system for an ambient condition, the household appliance comprises a cooling or ventilation system driven by a motor, wherein the indirect detection system is adapted to detect a condition of the motor or a change in the power consumption of the motor or a speed of the motor that can be assigned to a sealed ambient condition, e.g. a closed furniture housing door or shutter, or to a transition state from a non-sealed to sealed ambient condition, e.g. the closing of a furniture housing door or shutter, of the household appliance that is arranged inside the furniture housing. Such a detection or the monitoring of a motor characteristic curve of the cooling or ventilation system motor is based on the fact that in case that a furniture housing door or shutter is in its closed state an airstream that is ejected or moved by the cooling or ventilation system suffers a different (usually higher) resistance. Hence, the air input to the ventilation system and / or the air output is reduced as compared to a non-sealed ambient condition wherein the furniture housing door or shutter is open. Any such difference changes the load of the ventilation system and hence of the motor driving the system so that the speed, the power consumption and / or the parameters used to control the motor changes. Any such change can be used according to the invention in order to determine that the furniture housing door or shutter is in its closed state and that the household appliance is hence in a sealed ambient condition or that the furniture housing door or shutter is being closed and hence that the appliance is in a transition state from a non-sealed to a sealed ambient condition.

In a further embodiment of the present invention the household appliance comprises a noise sensor or noise detector being adapted to detect a specific noise condition or a specific change in the noise emission, preferably of the household appliance itself in the case of an indirect detection of the ambient condition, or alternatively of the noise emission of the surrounding, wherein said specific noise condition or said specific change in the noise emission can be assigned to a sealed ambient condition or to a transition state from a non-sealed to a sealed ambient condition of the household appliance that is arranged inside the furniture housing. In other words such a noise sensor can be used to detect if the "noise" of the household appliance changes due to a closing of a furniture housing door or shutter.

In a further preferred embodiment a blow test can be performed actively by a household appliance which comprises a ventilation system which is activated or accelerated during the blow test. In a similar way as discussed above it can hence be detected indirectly whether a sealed ambient condition is present by actively driving the ventilation system at a predefined speed and detecting parameters that are related to the resistance suffered by the ventilation system. Again the motor characteristic curve (speed, power consumption or control parameters) can be used for monitoring.

In a particularly advantageous embodiment of the present the household appliance comprises a temperature sensor that is adapted to detect a temperature or a change of temperature that can be assign to a sealed ambient condition or to a transition from a non-sealed to a sealed ambient condition of the household appliance that is arranged inside the furniture housing. Such a temperature sensor can be for example a NTC (negative temperature coefficient) thermistor or a PTC (positive temperature coefficient) thermistor. Based on such a temperature sensor installed in the household appliance it can be detected if the temperature of the appliance and / or in the ambience of the appliance reaches a critical level or goes beyond a predefined level or changes in a predefined way. Based on such a detection it can be derived that the furniture housing door or shutter is in its closed state and that the cooling therefore is limited.

Of course a combination of the above-described two approaches, i.e. the direct or indirect detection of an ambient condition, and any combination of two or more of the described detection systems is possible. That enables a more robust and save system design that can reliably detect the ambient conditions of the household appliance. Since according to the present invention the household appliance can also output an alarm signal to a user when a sealed ambient condition is detected, the user can be alerted to the potentially dangerous situation. With such an alarm signal, which can be an optical signal like a warning lamp or a LED or an output on a display or which can also be an acoustical alarm signal, the user can be informed that a furniture housing door or shutter is in its closed state so that he has the possibility to re-open the furniture housing door or shutter if it was closed unintentionally.

Anyone of the above-mentioned direct and indirect detection systems or detectors can be adapted to not only detect an open or a closed furniture housing door or shutter, but also a situation in between, i.e. a partially closed furniture housing door or shutter or a moving furniture housing door or shutter where a partially closed door or shutter or a moving door or shutter can refer to a transition state from a non-sealed to a sealed ambient condition. The movement of a furniture housing door or shutter can preferably be detected by the detection of changes in detector signals.

In an embodiment of the present invention the household appliance is switched-off completely in the second operation mode. In a more beneficial embodiment, referring to a household appliance that comprises a ventilation and / or a cooling system that is operated during at least part of the running mode of the household appliance, preferably said system is running also in the second operation mode and still preferably it can be controlled by the control unit also during at least part of the second operation mode. That has the advantage that no abrupt switch-off is performed while the temperature of the household appliance might still rise due to continued heat accumulation. In addition, a third operation mode can be provided which can be executed after said second operation mode, wherein the household appliance is switched from the second operation mode into the third operation mode, e.g. after a pre-defined period of time, and wherein the household appliance is switched-off or brought into a stand-by condition during the third operation mode. Thus, after a furniture housing door or shutter has been closed, in a first step any undue further active heating of the household appliance by its activated heating elements is efficiently avoided during the second operation mode, since the heat emission of the appliance is reduced, e.g. by switching off the heating element of an oven or a cooking hob or a dishwasher or a tumble dryer or the heat exchanger of a refrigerator or a freezer. In addition, during the second operation mode the ventilation system can be still running so as to avoid any further heat accumulation. Whereas as soon as the necessary after-cooling has been performed the household appliance can be switched-off completely or brought into the standby condition where also the ventilation is switched-off in said third operation mode.

In a further preferred embodiment of the present invention the presence of the sealed ambient situation is monitored and it is evaluated whether a sealed ambient condition is only present for a set short period of time (e.g. less than a minute or less than 10 seconds), such that according to a presetting such a situation can be identified to be uncritical and can be assigned to constitute a non-sealed ambient condition. In said preferred embodiment of the invention the household appliance runs more stably and measurement failures do not lead to any transition to the second or low power operation mode.

A particularly preferred embodiment of the present invention refers to a household oven or a cooking hob wherein a photodiode is integrated, e.g. in the front of the oven or in a control panel of the oven or in the top of a cooking hob or in a control panel of the cooking hob. Such a photodiode can detect the ambient brightness. Therefore, the oven or a cooking hob can be controlled independently of the any influence of the shape or structure of the material surface of the furniture. Even the open or close state of a furniture housing door or shutter comprising glass that is not fully transparent, e.g. frosted glass or coloured glass, can be detected with such an oven or cooking hob, since the opening or closing of such a glass door or shutter of a furniture housing still influences the output of the photodiode. In order to enable a still higher safety level and a still improved system robustness, in addition the temperature of the oven or the cooking hob and / or of its near surrounding and especially of a printed circuit board that is comprised within the oven or the cooking hob can be monitored by means of a temperature sensor, such as a NTC thermistor. For that purpose, temperature sensors or NTC sensors can be used which are already present in the household appliance for other reasons, e.g. inside an oven or a cooking hob, in order to implement the present invention. Such NTC sensors are commonly used on the PCB boards of user interfaces or on the power-boards of ovens or cooking hobs. That situation can also be used according to the present invention in order to provide a suitably adapted kit or software for upgrading an already existing household appliance.

In a further preferred embodiment, the household appliance can generate a control signal based on information provided by the means that detect the sealed or non-sealed ambient condition. In response to said control signal the sealed ambient condition can be influenced actively by the household appliance. For example if an activated operation program foresees that the appliance should start, however according to the control signal the appliance is presently in a sealed ambient condition, a control signal can be emitted by the appliance control that controls the automatic opening of a furniture housing door or shutter by an actuator or a motor, such that the ambient condition is changed into un-sealed, which can again be detected by the appliance which subsequently can start to operate. In addition, when the operation program is finished and the temperature level has reached again a save level, such that it is admissible to transfer the appliance from the non-sealed to the sealed ambient condition, a further control signal can be emitted, that allows to close the furniture housing door or shutter again and the appliance is transferred back into the sealed ambient condition.

According to a second aspect of the invention a method of operating a household appliance is provided, in particular of operating an oven, a refrigerator, a freezer, a dishwasher, a washing machine or a tumble dryer, wherein said household appliance comprises a control unit and means for detecting an ambient condition outside of the household appliance, the means being connected in signal communication to the control unit, wherein said means for detecting an ambient condition detects whether the household appliance is in a sealed ambient condition, in a non-sealed ambient condition, or in a transition state from a non-sealed to a sealed ambient condition, and communicates said sealed or non-sealed ambient condition or said transition state to the control unit and the control unit switches the household appliance from a running operation mode into a second operation mode, wherein a heat emission of the appliance is reduced in comparison to the running operation mode or the control unit starts the household appliance in said second operation mode and the control unit outputs an alarm signal to a user of the household appliance, when a sealed ambient condition or a transition state from a non-sealed to a sealed ambient condition is detected by said means for detecting an ambient condition.

According to a preferred embodiment of the method of the invention, said sealed ambient condition is defined by a substantially sealed furniture housing wherein the appliance is arranged and which comprises a door or shutter that can be opened for providing access to the household appliance and closed for hiding the household appliance inside said furniture housing, wherein in the sealed ambient condition the door or shutter of the furniture housing is in a closed state, in the non-sealed ambient condition the door or shutter of the furniture housing is an open state, and in the transition state the door or shutter of the furniture housing is in an at least partially closed state.

In a further preferred embodiment, a ventilation system or a cooling system of the household appliance that is operated during at least part of the running mode of the household appliance can still be running during at least part of the second operation mode. Preferably, the control unit of the household appliance controls and / or checks whether a detected sealed ambient condition is present for at least minimum pre-defined period of time prior to switching the household appliance into the second operation mode.

An example of a household appliance and its operation method according to the present invention is described below by reference to the accompanying schematical drawing in which:
- FIG. 1: shows a perspective view of a household oven where the oven is disposed within a kitchen furniture cabinet,
- FIG. 2: shows a cross section through the oven of Fig. 1, and
- Fig. 3: shows a perspective view of a household cooking hob where the hob is disposed within a kitchen furniture cabinet which is a kitchen worktop.

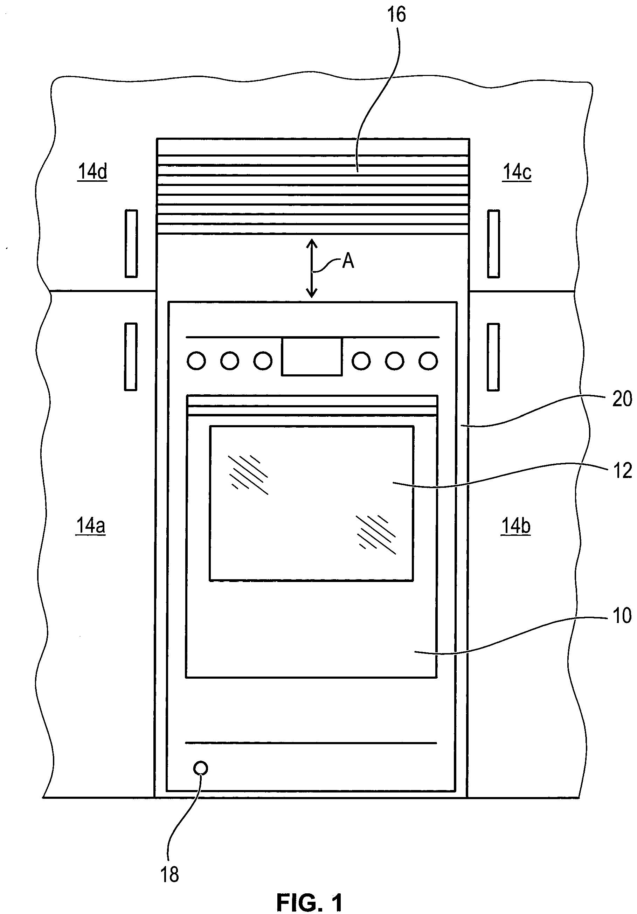

FIG. 1 shows a household oven 10 comprising a door 12 of the oven for accessing a muffle of the oven. The oven 10 is integrated into a housing 20 of a kitchen furniture. The furniture comprises further housings which can be closed by the doors or shutters 14a, 14b, 14c and 14d. The furniture further comprises a door in the form of a rolling shutter 16 that can be moved upwards and downwards along direction "A" for opening and closing the housing 20 in order to hide the oven 10 when the oven 10 is not in use and is switched off. Instead of a rolling shutter 16 also a sliding door or shutter or a hinged door or shutter can be used. The oven 10 has a light detector comprising a photo diode 18 which can be provided at any position on the front of the oven 10 facing out of the housing and which is adapted and arranged to detect the ambient light of the kitchen.

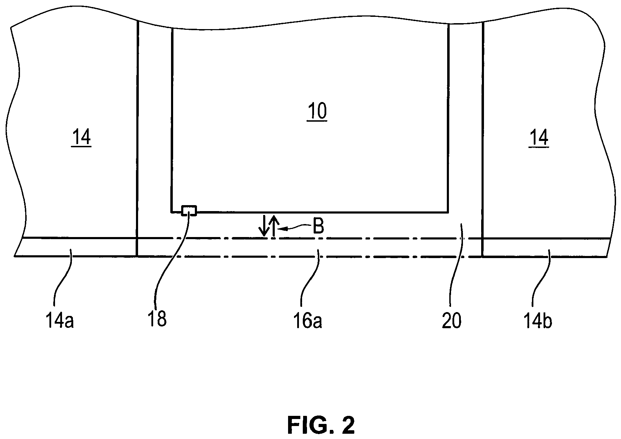

Fig. 2 shows a horizontal cross section through the oven 10 and the housing 20 as well as the adjacent elements 14 (like cup boards) at the height level of the photo diode 18. A broken line 16a indicates the rolling shutter 16 of fig. 1 in a closed position, which defines together with the other surrounding elements 14 of the furniture and a rear side of the essentially sealed housing 20 a sealed ambient condition for the oven 10. In said closed position, the rolling shutter 16 shadows the photo diode 18 from the ambient light of the kitchen. As soon as the sealed ambient condition is detected due to a reduced electrical output of the photo diode 18, a control unit of the oven switches the oven 10 into a second operation mode wherein the heat emission of appliance is reduced by switching off heating elements of the oven. Preferably, in parallel a ventilation of the oven 10 remains running so as to avoid any overheating. In addition an alarm signal can be provided.

In an alternative embodiment, the reference number 18 indicates a combination of an infrared (IR) emitter and an IR detector. The emitted IR light is reflected by the rear side of the rolling shutter 16 if the shutter is in the lower closing position (see arrows "B"). The reflected light can then be detected by the IR detector 18.

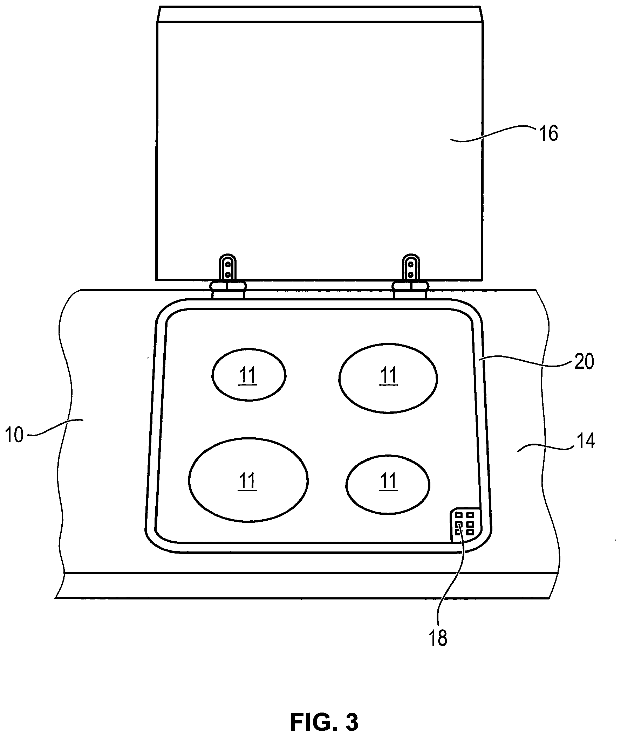

FIG. 3 shows a household cooking hob 10 comprising four heated cooking areas 11 on which pots or pans can be arranged for heating. The cooking hob 10 is integrated into a housing 20 of a kitchen furniture, wherein the housing is a kitchen worktop. The kitchen worktop further comprises a shutter 16 that is hinged to the worktop 20 in a rear region behind the cooking hob and that can be folded downwards in order to cover and hide the cooking hob 10 when the oven 10 is not in use and is switched off. Instead of a down-foldable shutter 16 also door or shutter that can be simply put on top or can be slided sideways over the cooking hob in order to partially or completely cover it, in particular a cut board, can be used. The cooking hob 10 has a light detector comprising a photo diode 18 which can be provided at any position on the top of the cooking hob 10 facing upwardly out of the cooking hob top surface and which is adapted and arranged to detect the ambient light of the kitchen.

## Claims

1. Household appliance (10), in particular an oven, a cooking hob, a refrigerator, a freezer, a dishwasher, a washing machine or a tumble dryer, comprising a control unit and means (18) for detecting an ambient condition outside of the household appliance, the means being connected in signal communication to the control unit,
**characterized in that**
the means (18) for detecting an ambient condition are adapted to detect whether the household appliance (10) is in a sealed ambient condition, in a non-sealed ambient condition or in a transition state from a non-sealed to a sealed ambient condition and to communicate said sealed or non-sealed ambient condition or said transition state to the control unit, and
the control unit is adapted to switch the household appliance from a running operation mode into a second operation mode wherein a heat emission of the appliance (10) is reduced in comparison to the running operation mode or to start the household appliance (10) in said second operation mode and to output an alarm signal to a user of the household appliance when a sealed ambient condition or a transition state from a non-sealed to a sealed ambient condition is detected by said means (18) for detecting an ambient condition,
wherein the sealed ambient condition is defined by a furniture housing (20) wherein the appliance (10) is arranged and which comprises a door or shutter (16) that can be opened for providing access to the household appliance (10) and closed for hiding the household appliance (10) inside said furniture housing (20), wherein in the sealed ambient condition the door or shutter (16) of the furniture housing (20) is in a closed state, in the non-sealed ambient condition the door or shutter (16) of the furniture housing (20) is in an open state, and in the transition state the (16) door or shutter of the furniture housing (20) is in a motion from an open state towards a closed state or is stopped in between these two states.

2. Household appliance (10) according to claim 1, **characterized in that** the control unit of the household appliance is adapted to identify at least two of said sealed ambient condition, non-sealed ambient condition and transition state from a non-sealed to a sealed ambient condition based on said signal communication with said means (18) for detecting an ambient condition outside of the household appliance.

3. Household appliance (10) according to any of the preceding claims, **characterized in that** the door or shutter (16) of the furniture housing (20) can be opened for providing access to at least one of a loading door (12) of the household appliance (10) and a heated top surface of the household appliance (10), in particular wherein the door or shutter (16) of the furniture housing is a hinged door or shutter or a sliding door or shutter or a rolling door or shutter.

4. Household appliance (10) according to any of the preceding claims, **characterized in that** the means (18) for detecting the ambient condition comprise at least one of the following detection systems or a combination thereof:
an infrared or capacitive or ultra-sonic detection system adapted for distance measurements for measuring a distance between the household appliance (10) that is arranged inside the furniture housing (20) and the door or shutter (16) of the furniture housing (20),
a Reed contact-based detection system adapted for movement detection for detection of a movement of the door or shutter (16) of the furniture housing (20) relative to the household appliance (10) that is arranged inside the furniture housing (20),
a light detection system comprising a photo diode (18) adapted to detect ambient light for detecting an ambient light level inside the furniture housing (20) wherein the household appliance (10) is arranged, or
a RFID detection system for detecting the distance of a RFID tag for detecting the distance between a RFID tag that is arranged on the door or shutter (16) of the furniture housing (20) relative to the household appliance (10) that is arranged inside the furniture housing (20) or vice versa.

5. Household appliance (10) according to any of the preceding claims, **characterized in that** the means (18) for detecting an ambient condition are provided as a detection system for detecting the ambient condition indirectly by detecting an internal parameter of the household appliance that can be assigned to a sealed or to a non-sealed ambient condition of the household appliance (10) that is arranged inside the furniture housing (20).

6. Household appliance (10) according to claim 5, **characterized in that** the household appliance (10) comprises a cooling system or a ventilation system driven by a motor, wherein the detection system is adapted to detect a condition of the motor or a change in power consumption of the motor or a speed of the motor of the cooling or ventilation system that can be assigned to a sealed ambient condition or to a transition state from an non-sealed to a sealed ambient condition of the household appliance (10) that is arranged inside the furniture housing (20).

7. Household appliance (10) according to any of the preceding claims, **characterized in that** the household appliance (10) comprises a noise sensor being adapted to detect a specific noise condition of the household appliance or a specific change in the noise emission of the household appliance (10) that can be assigned to a sealed ambient condition or to a transition state from an non-sealed to a sealed ambient condition of the household appliance (10) that is arranged inside the furniture housing (20).

8. Household appliance (10) according to any of the preceding claims, **characterized in that** the household appliance (10) comprises a temperature sensor being adapted to detect a temperature or a change in temperature of the household appliance or in the ambience of the household appliance that can be assigned to a sealed ambient condition or to a transition state from a non-sealed to a sealed ambient condition of the household appliance (10) that is arranged inside the furniture housing (20), in particular wherein the temperature sensor is a NTC thermistor or a PTC thermistor.

9. Household appliance (10) according to any of the preceding claims, **characterized in that** in the second operation mode the household appliance (10) is switched off.

10. Household appliance (10) according to any of claims 1 to 8, **characterized in that** the household appliance comprises a ventilation system that is operated during at least part of the running operation mode of the household appliance (10), wherein in the second operation mode the ventilation system is still running, preferably wherein the ventilation system is still controlled by the control unit in the second operation mode.

11. Household appliance (10) according to claim 10, **characterized in that** the control unit is adapted to operate during said second operation mode of the household appliance (10) according to an operation program or according to a set period of time, wherein according to said operation program or after said set period of time the household appliance (10) is switched from the second operation mode into a third operation mode, wherein the household appliance (10) is switched-off completely or is brought into a stand-by condition.

12. Household appliance (10) according to any of the preceding claims, **characterized in that** the control unit is adapted to check whether an already detected sealed ambient condition is present for at least a minimum pre-defined period of time prior to switching the household appliance (10) into the second operation mode.

13. Household appliance (10) according to any of the preceding claims, **characterized in that** the control unit of the household appliance (10) is adapted to generate a control signal based on the detection of at least one of the sealed, the non-sealed and/or the transition state from the non-sealed to the sealed ambient condition by the means for detecting an ambient condition, wherein in response to said control signal the ambient condition can be switched actively by the household appliance from a sealed to a non-sealed ambient condition or vice versa by controlling an actuator or a motor which is adapted to move the door or shutter (16) of the furniture housing (20).

14. Method of operating a household appliance (10), in particular an oven, a cooking hob, a refrigerator, a freezer, a dishwasher, a washing machine or a tumble dryer, comprising a control unit and means (18) for detecting an ambient condition outside of the household appliance, the means being connected in signal communication to the control unit,
**characterized in that** the method comprises the following steps:
said means (18) for detecting an ambient condition detects whether the household appliance is in a sealed ambient condition, in a non-sealed ambient condition, or in a transition state from a non-sealed to a sealed ambient condition, and communicates said sealed or non-sealed ambient condition or said transition state to the control unit and the control unit switches the household appliance (10) from a running operation mode into a second operation mode, wherein a heat emission of the appliance (10) is reduced in comparison to the running operation mode or the control unit starts the household appliance (10) in said second operation mode and the control unit outputs an alarm signal to a user of the household appliance, when a sealed ambient condition or a transition state from a non-sealed to a sealed ambient condition is detected by said means (18) for detecting an ambient condition,
wherein the sealed ambient condition is defined by a furniture housing (20) wherein the appliance (10) is arranged and which comprises a door or shutter (16) that can be opened for providing access to the household appliance (10) and closed for hiding the household appliance (10) inside said furniture housing (20), wherein in the sealed ambient condition the door or shutter (16) of the furniture housing (20) is in a closed state, in the non-sealed ambient condition the door or shutter (16) of the furniture housing (20) is an open state, and in the transition state the (16) door or shutter of the furniture housing (20) is in a motion from an open state towards a closed state or is stopped in between these two states.

15. Method according to claim 14, **characterized in that** a ventilation system or a cooling system of the household appliance (10) that is operated during at least part of the running operation mode of the household appliance (10) is still running during at least part of the second operation mode, preferably wherein the control unit of the household appliance (10) controls and / or checks whether a detected sealed ambient condition is present for at least a minimum pre-defined period of time prior to switching the household appliance (10) into the second operation mode.

## Patentansprüche

1. Haushaltsgerät (10), insbesondere ein Backofen, ein Kochfeld, ein Kühlschrank, ein Tiefkühlgerät, eine Geschirrspülmaschine, eine Waschmaschine oder ein Wäschetrockner, umfassend eine Steuereinheit und Mittel (18) zum Detektieren einer Umgebungsbedingung außerhalb des Haushaltsgeräts, wobei die Mittel in Signalverbindung mit der Steuereinheit verbunden sind, **dadurch gekennzeichnet, dass** die Mittel (18) zum Detektieren einer Umgebungsbedingung angepasst sind zu detektieren, ob sich das Haushaltsgerät (10) in einer dichtschließenden Umgebungsbedingung, in einer nicht dichtschließenden Umgebungsbedingung oder in einem Übergangszustand von einer nicht dichtschließenden hin zu einer dichtschließenden Umgebungsbedingung befindet sowie diese dichtschließende oder nicht dichtschließende Umgebungsbedingung oder den Übergangszustand an die Steuereinheit zu kommunizieren, und die Steuereinheit angepasst ist, das Haushaltsgerät von einem laufenden Betriebsmodus in einen zweiten Betriebsmodus umzuschalten, wobei eine Wärmeemission des Geräts (10) im Vergleich zum laufenden Betriebsmodus reduziert ist, oder das Haushaltsgerät (10) in dem zweiten Betriebsmodus einzuschalten und ein Warnsignal an einen Benutzer des Haushaltsgeräts auszugeben, wenn eine dichtschließende Umgebungsbedingung oder ein Übergangszustand von einer nicht dichtschließenden hin zu einer dichtschließenden Umgebungsbedingung von den Mitteln (18) zum Detektieren einer Umgebungsbedingung detektiert wird,
wobei die dichtschließende Umgebungsbedingung von einem Gehäuseschrank (20) definiert wird, in welchem das Gerät (10) angeordnet ist und welcher eine Tür oder eine Klappe (16) umfasst, die geöffnet werden kann, um einen Zugang zu dem Haushaltsgerät (10) bereitzustellen, und geschlossen werden kann, um das Haushaltsgerät (10) in dem Gehäuseschrank (20) zu verbergen, wobei sich bei der dichtschließenden Umgebungsbedingung die Tür oder Klappe (16) des Gehäuseschranks (20) in geschlossenem Zustand befindet, sich bei der nicht dichtschließenden Umgebungsbedingung die Tür oder Klappe (16) des Gehäuseschranks (20) in einem geöffneten Zustand befindet und sich bei dem Übergangszustand die (16) Tür oder Klappe des Gehäuseschranks (20) in einer Bewegung aus einem geöffneten Zustand in Richtung auf einen geschlossenen Zustand befindet oder zwischen diesen beiden Zuständen angehalten wird.

2. Haushaltsgerät (10) nach Anspruch 1, **dadurch gekennzeichnet, dass** die Steuereinheit des Haushaltsgeräts angepasst ist, basierend auf der Signalverbindung mit den Mitteln (18) zum Detektieren einer Umgebungsbedingung außerhalb des Haushaltsgeräts mindestens zwei aus der dichtschließenden Umgebungsbedingung, der nicht dichtschließenden Umgebungsbedingung und dem Übergangszustand von einer nicht dichtschließenden hin zu einer dichtschließenden Umgebungsbedingung zu identifizieren.

3. Haushaltsgerät (10) nach einem der vorhergehenden Ansprüche, **dadurch gekennzeichnet, dass** die Tür oder Klappe (16) des Gehäuseschranks (20) geöffnet werden kann, um einen Zugriff auf mindestens eins aus einer Ladetür (12) des Haushaltsgeräts (10) und einer erwärmten Oberfläche des Haushaltsgeräts (10) bereitzustellen, insbesondere, wobei die Tür oder Klappe (16) des Gehäuseschranks eine Schwenktür oder -klappe oder eine Schiebetür oder -klappe oder eine Rolltür oder -klappe ist.

4. Haushaltsgerät (10) nach einem der vorhergehenden Ansprüche, **dadurch gekennzeichnet, dass** die Mittel (18) zum Detektieren der Umgebungsbedingung mindestens eins aus den folgenden Detektionssystemen oder eine Kombination davon umfassen:
ein Infrarot- oder ein kapazitives oder ein Ultraschall-Detektionssystem, angepasst für Abstandsmessungen, um einen Abstand zwischen dem Haushaltsgerät (10), das in dem Gehäuseschrank (20) angeordnet ist, und der Tür oder Klappe (16) des Gehäuseschranks (20) zu messen,
ein Reedkontakt-Detektionssystem, angepasst für eine Bewegungsdetektion, um eine Bewegung der Tür oder Klappe (16) des Gehäuseschranks (20) relativ zu dem Haushaltsgerät (10), das in dem Gehäuseschrank (20) angeordnet ist, zu detektieren,
ein Lichtdetektionssystem, umfassend eine Fotodiode (18), angepasst zum Detektieren von Umgebungslicht, um ein Umgebungslichtniveau in dem Gehäuseschrank (20), in dem das Haushaltsgerät (10) angeordnet ist, zu detektieren, oder
ein RFID-Detektionssystem zum Detektieren des Abstands eines RFID-Transponders, um den Abstand zwischen einem RFID-Transponder, der an der Tür oder Klappe (16) des Gehäuseschranks (20) angeordnet ist, relativ zu dem Haushaltsgerät (10), das in dem Gehäuseschrank (20) angeordnet ist, oder umgekehrt zu detektieren.

5. Haushaltsgerät (10) nach einem der vorhergehenden Ansprüche, **dadurch gekennzeichnet, dass** die Mittel (18) zum Detektieren einer Umgebungsbedingung als ein Detektionssystem zum indirekten Detektieren der Umgebungsbedingung bereitgestellt sind, indem ein interner Parameter des Haushaltsgeräts detektiert wird, der einer dichtschließenden oder einer nicht dichtschließenden Umgebungsbedingung des Haushaltsgeräts (10), das in dem Gehäuseschrank (20) angeordnet ist, zugeordnet werden kann.

6. Haushaltsgerät (10) nach Anspruch 5, **dadurch gekennzeichnet, dass** das Haushaltsgerät (10) ein motorbetriebenes Kühlsystem oder Belüftungssystem umfasst, wobei das Detektionssystem angepasst ist, einen Zustand des Motors oder eine Änderung im Stromverbrauch des Motors oder einer Drehzahl des Motors des Kühl- oder Belüftungssystems zu detektieren, die einer dichtschließenden Umgebungsbedingung oder einem Übergangszustand von einer nicht dichtschließenden hin zu einer dichtschließenden Umgebungsbedingung des Haushaltsgeräts (10), das in dem Gehäuseschrank (20) angeordnet ist, zugeordnet werden kann.

7. Haushaltsgerät (10) nach einem der vorhergehenden Ansprüche, **dadurch gekennzeichnet, dass** das Haushaltsgerät (10) einen Geräuschsensor umfasst, der angepasst ist, eine spezifische Geräuschbedingung des Haushaltsgeräts oder eine spezifische Änderung der Geräuschemission des Haushaltsgeräts (10) zu detektieren, die einer dichtschließenden Umgebungsbedingung oder einem Übergangszustand von einer nicht dichtschließenden hin zu einer dichtschließenden Umgebungsbedingung des Haushaltsgeräts (10), das in dem Gehäuseschrank (20) angeordnet ist, zugeordnet werden kann.

8. Haushaltsgerät (10) nach einem der vorhergehenden Ansprüche, **dadurch gekennzeichnet, dass** das Haushaltsgerät (10) einen Temperatursensor umfasst, der angepasst ist, eine Temperatur oder eine Änderung der Temperatur des Haushaltsgeräts oder im Umfeld des Haushaltsgeräts zu detektieren, die einer dichtschließenden Umgebungsbedingung oder einem Übergangszustand von einer nicht dichtschließenden hin zu einer dichtschließenden Umgebungsbedingung des Haushaltsgeräts (10), das in dem Gehäuseschrank (20) angeordnet ist, zugeordnet werden kann, insbesondere, wobei der Temperatursensor ein NTC-Heißleiter oder ein PTC-Heißleiter ist.

9. Haushaltsgerät (10) nach einem der vorhergehenden Ansprüche, **dadurch gekennzeichnet, dass** das Haushaltsgerät (10) im zweiten Betriebsmodus ausgeschaltet ist.

10. Haushaltsgerät (10) nach einem der Ansprüche 1 bis 8, **dadurch gekennzeichnet, dass** das Haushaltsgerät ein Belüftungssystem umfasst, das während mindestens eines Teils des laufenden Betriebsmodus des Haushaltsgeräts (10) betrieben wird, wobei das Belüftungssystem im zweiten Betriebsmodus noch läuft, bevorzugt, wobei das Belüftungssystem im zweiten Betriebsmodus noch von der Steuereinheit gesteuert wird.

11. Haushaltsgerät (10) nach Anspruch 10,
**dadurch gekennzeichnet, dass** die Steuereinheit angepasst ist, während des zweiten Betriebsmodus des Haushaltsgeräts (10) gemäß einem Betriebsprogramm oder gemäß einem eingestellten Zeitraum betrieben zu werden, wobei das Haushaltsgerät (10) gemäß dem Betriebsprogramm oder nach dem eingestellten Zeitraum aus dem zweiten Betriebsmodus in einen dritten Betriebsmodus umgeschaltet wird, wobei das Haushaltsgerät (10) vollständig ausgeschaltet wird oder in einen Bereitschaftszustand überführt wird.

12. Haushaltsgerät (10) nach einem der vorhergehenden Ansprüche, **dadurch gekennzeichnet, dass** die Steuereinheit angepasst ist zu überprüfen, ob vor dem Umschalten des Haushaltsgeräts (10) in den zweiten Betriebsmodus eine bereits detektierte dichtschließende Umgebungsbedingung für mindestens einen vordefinierten Mindestzeitraum vorhanden ist.

13. Haushaltsgerät (10) nach einem der vorhergehenden Ansprüche, **dadurch gekennzeichnet, dass** die Steuereinheit des Haushaltsgeräts (10) angepasst ist, basierend auf der Detektion von mindestens einem aus der dichtschließenden, der nicht dichtschließenden und/oder dem Übergangszustand von der nicht dichtschließenden hin zu der dichtschließenden Umgebungsbedingung durch die Mittel zum Detektieren einer Umgebungsbedingung ein Steuersignal zu generieren, wobei die Umgebungsbedingung in Reaktion auf das Steuersignal von einer dichtschließenden hin zu einer nicht dichtschließenden Umgebungsbedingung oder umgekehrt durch das Haushaltsgerät aktiv umgeschaltet werden kann durch Steuern eines Aktors oder eines Motors, der angepasst ist, die Tür oder Klappe (16) des Gehäuseschranks (20) zu bewegen.

14. Verfahren zum Betreiben eines Haushaltsgeräts (10), insbesondere eines Backofens, eines Kochfelds, eines Kühlschranks, eines Tiefkühlgeräts, einer Geschirrspülmaschine, einer Waschmaschine oder eines Wäschetrockners, umfassend eine Steuereinheit und Mittel (18) zum Detektieren einer Umgebungsbedingung außerhalb des Haushaltsgeräts, wobei die Mittel in Signalverbindung mit der Steuereinheit verbunden sind, **dadurch gekennzeichnet, dass** das Verfahren die folgenden Schritte umfasst:
die Mittel (18) zum Detektieren einer Umgebungsbedingung detektieren, ob sich das Haushaltsgerät in einer dichtschließenden Umgebungsbedingung, in einer nicht dichtschließenden Umgebungsbedingung oder in einem Übergangszustand von einer nicht dichtschließenden hin zu einer dichtschließenden Umgebungsbedingung befindet sowie kommunizieren diese dichtschließende oder nicht dichtschließende Umgebungsbedingung oder den Übergangszustand an die Steuereinheit, und die Steuereinheit schaltet das Haushaltsgerät (10) von einem laufenden Betriebsmodus in einen zweiten Betriebsmodus um, wobei eine Wärmeemission des Geräts (10) verglichen mit dem laufenden Betriebsmodus reduziert wird, oder die Steuereinheit schaltet das Haushaltsgerät (10) in dem zweiten Betriebsmodus ein und die Steuereinheit gibt ein Warnsignal an einen Benutzer des Haushaltsgeräts aus, wenn eine dichtschließende Umgebungsbedingung oder ein Übergangszustand von einer nicht dichtschließenden hin zu einer dichtschließenden Umgebungsbedingung von den Mitteln (18) zum Detektieren einer Umgebungsbedingung detektiert wird, wobei die dichtschließende Umgebungsbedingung durch einen Gehäuseschrank (20) definiert wird, in welchem das Gerät (10) angeordnet ist und welcher eine Tür oder Klappe (16) umfasst, die geöffnet werden kann, um einen Zugang zu dem Haushaltsgerät (10) bereitzustellen, und geschlossen werden kann, um das Haushaltsgerät (10) in dem Gehäuseschrank (20) zu verbergen, wobei sich bei der dichtschließenden Umgebungsbedingung die Tür oder Klappe (16) des Gehäuseschranks (20) in einem geschlossenen Zustand befindet, sich bei der nicht dichtschließenden Umgebungsbedingung die Tür oder Klappe (16) des Gehäuseschranks (20) in einem geöffneten Zustand befindet und sich bei dem Übergangszustand die (16) Tür oder Klappe des Gehäuseschranks (20) in einer Bewegung aus einem geöffneten Zustand in Richtung auf einen geschlossenen Zustand befindet oder zwischen diesen beiden Zuständen angehalten wird.

15. Verfahren nach Anspruch 14, **dadurch gekennzeichnet, dass** ein Belüftungssystem oder ein Kühlsystem des Haushaltsgeräts (10), das während mindestens eines Teils des laufenden Betriebsmodus des Haushaltsgeräts (10) betrieben wird, während mindestens eines Teils des zweiten Betriebsmodus noch läuft, bevorzugt, wobei die Steuereinheit des Haushaltsgeräts (10) steuert und/oder überprüft, ob eine detektierte dichtschließende Umgebungsbedingung über mindestens einen vordefinierten Mindestzeitraum vor Umschalten des Haushaltsgeräts (10) in den zweiten Betriebsmodus vorhanden ist.

## Revendications

1. Appareil ménager (10), en particulier un four, une table de cuisson, un réfrigérateur, un congélateur, un lave-vaisselle, un lave-linge ou un sèche-linge à tambour, comportant une unité de commande et un moyen (18) servant à détecter une condition ambiante à l'extérieur de l'appareil ménager, le moyen étant relié en communication de signaux à l'unité de commande, **caractérisé en ce que**
le moyen (18) servant à détecter une condition ambiante est prévu pour détecter si l'appareil ménager (10) est dans une condition ambiante hermétique, dans une condition ambiante non hermétique ou dans un état de transition d'une condition ambiante non hermétique à une condition ambiante hermétique et pour communiquer ladite condition ambiante hermétique ou non hermétique ou ledit état de transition à l'unité de commande, et l'unité de commande est prévue pour faire passer l'appareil ménager d'un mode de fonctionnement en marche à un deuxième mode de fonctionnement où une émission de chaleur de l'appareil (10) est réduite en comparaison du mode de fonctionnement en marche ou pour démarrer l'appareil ménager (10) dans ledit deuxième mode de fonctionnement et pour délivrer un signal d'alarme à un utilisateur de l'appareil ménager lorsqu'une condition ambiante hermétique ou un état de transition d'une condition ambiante non hermétique à une condition(e) ambiante hermétique est détecté par ledit moyen (18) servant à détecter une condition ambiante,
la condition ambiante hermétique étant définie par une enceinte (20) de meuble où l'appareil (10) est disposé et qui comporte une porte ou un volet (16) qui peut être ouvert(e) pour donner accès à l'appareil ménager (10) et fermé(e) pour cacher l'appareil ménager (10) à l'intérieur de ladite enceinte (20) de meuble, dans lequel, dans la condition ambiante hermétique, la porte ou le volet (16) de l'enceinte (20) de meuble est dans un état fermé, dans la condition ambiante non hermétique, la porte ou le volet (16) de l'enceinte (20) de meuble est dans un état ouvert, et dans l'état de transition, la porte ou le volet (16) de l'enceinte (20) de meuble est en mouvement d'un état ouvert vers un état fermé ou est arrêté(e) entre ces deux états.

2. Appareil ménager (10) selon la revendication 1, **caractérisé en ce que** l'unité de commande de l'appareil ménager est prévue pour identifier au moins deux situations parmi ladite condition ambiante hermétique, ladite condition ambiante non hermétique et ledit état de transition d'une condition ambiante non hermétique à une condition ambiante hermétique d'après ladite communication de signaux avec ledit moyen (18) servant à détecter une condition ambiante à l'extérieur de l'appareil ménager.

3. Appareil ménager (10) selon l'une quelconque des revendications précédentes, **caractérisé en ce que** la porte ou le volet (16) de l'enceinte (20) de meuble peut être ouvert (e) pour donner accès à une porte (12) de chargement de l'appareil ménager (10) et/ou à une surface supérieure chauffée de l'appareil ménager (10), la porte ou le volet (16) de l'enceinte de meuble étant en particulier une porte ou un volet à charnière, ou une porte ou un volet coulissant (e) ou une porte ou un volet roulant(e).

4. Appareil ménager (10) selon l'une quelconque des revendications précédentes, **caractérisé en ce que** le moyen (18) servant à détecter la condition ambiante comporte au moins un des systèmes de détection suivants ou une combinaison de ceux-ci :
un système de détection à infrarouge, capacitif ou ultrasonique prévu pour des mesures de distance afin de mesurer une distance entre l'appareil ménager (10) qui est disposé à l'intérieur de l'enceinte (20) de meuble et la porte ou le volet (16) de l'enceinte (20) de meuble,
un système de détection basé sur un contact de Reed, prévu pour une détection de mouvement en vue de la détection d'un mouvement de la porte ou du volet (16) de l'enceinte (20) de meuble par rapport à l'appareil ménager (10) qui est disposé à l'intérieur de l'enceinte (20) de meuble,
un système de détection de lumière comportant une photodiode (18) prévue pour détecter une lumière ambiante afin de détecter un niveau de lumière ambiante à l'intérieur de l'enceinte (20) de meuble où est disposé l'appareil ménager (10), ou
un système de détection RFID servant à détecter la distance d'une étiquette RFID afin de détecter la distance entre une étiquette RFID qui est disposée sur la porte ou le volet (16) de l'enceinte (20) de meuble par rapport à l'appareil ménager (10) qui est disposé à l'intérieur de l'enceinte (20) de meuble ou vice versa.

5. Appareil ménager (10) selon l'une quelconque des revendications précédentes, **caractérisé en ce que** le moyen (18) servant à détecter une condition ambiante est réalisé comme un système de détection servant à détecter la condition ambiante indirectement en détectant un paramètre interne de l'appareil ménager qui peut être attribué à une condition ambiante hermétique ou non hermétique de l'appareil ménager (10) qui est disposé à l'intérieur de l'enceinte (20) de meuble.

6. Appareil ménager (10) selon la revendication 5, **caractérisé en ce que** l'appareil ménager (10) comporte un système de refroidissement ou un système de ventilation entraîné par un moteur, le système de détection étant prévu pour détecter un état du moteur ou une variation de la consommation d'énergie du moteur ou une vitesse du moteur du système de refroidissement ou de ventilation qui peuvent être attribués à une condition ambiante hermétique ou à un état de transition d'une condition ambiante non hermétique à une condition ambiante hermétique de l'appareil ménager (10) qui est disposé à l'intérieur de l'enceinte (20) de meuble.

7. Appareil ménager (10) selon l'une quelconque des revendications précédentes, **caractérisé en ce que** l'appareil ménager (10) comporte un capteur de bruit qui est prévu pour détecter une condition de bruit spécifique de l'appareil ménager ou une variation spécifique dans l'émission de bruit de l'appareil ménager (10) qui peuvent être attribuées à une condition ambiante hermétique ou à un état de transition d'une condition ambiante non hermétique à une condition ambiante hermétique de l'appareil ménager (10) qui est disposé à l'intérieur de l'enceinte (20) de meuble.

8. Appareil ménager (10) selon l'une quelconque des revendications précédentes, **caractérisé en ce que** l'appareil ménager (10) comporte un capteur de température qui est prévu pour détecter une température ou une variation de température de l'appareil ménager ou dans l'environnement de l'appareil ménager qui peuvent être attribuées à une condition ambiante hermétique ou à un état de transition d'une condition ambiante non hermétique à une condition ambiante hermétique de l'appareil ménager (10) qui est disposé à l'intérieur de l'enceinte (20) de meuble, le capteur de température étant en particulier une thermistance à NTC ou une thermistance à PTC.

9. Appareil ménager (10) selon l'une quelconque des revendications précédentes, **caractérisé en ce que**, dans le deuxième mode de fonctionnement, l'appareil ménager (10) est éteint.

10. Appareil ménager (10) selon l'une quelconque des revendications 1 à 8, **caractérisé en ce que** l'appareil ménager comporte un système de ventilation qui est actionné pendant au moins une partie du mode de fonctionnement en marche de l'appareil ménager (10), le système de ventilation étant encore en marche dans le deuxième mode de fonctionnement, le système de ventilation étant de préférence encore commandé par l'unité de commande dans le deuxième mode de fonctionnement.

11. Appareil ménager (10) selon la revendication 10, **caractérisé en ce que** l'unité de commande est prévue pour fonctionner pendant ledit deuxième mode de fonctionnement de l'appareil ménager (10) selon un programme de fonctionnement ou selon une période fixée, l'appareil ménager (10) étant commuté, selon ledit programme de fonctionnement ou après ladite période fixée, du deuxième mode de fonctionnement à un troisième mode de fonctionnement, où l'appareil ménager (10) est entièrement éteint ou est placé dans un état de veille.

12. Appareil ménager (10) selon l'une quelconque des revendications précédentes, **caractérisé en ce que** l'unité de commande est prévue pour vérifier si une condition ambiante hermétique déjà détectée est présente pendant au moins une période minimale prédéfinie avant le passage de l'appareil ménager (10) dans le deuxième mode de fonctionnement.

13. Appareil ménager (10) selon l'une quelconque des revendications précédentes, **caractérisé en ce que** l'unité de commande de l'appareil ménager (10) est prévue pour générer un signal de commande d'après la détection d'au moins un état parmi les états hermétique, non hermétique et/ou de transition de la condition ambiante non hermétique à la condition ambiante hermétique par le moyen servant à détecter une condition ambiante, la condition ambiante pouvant, en réaction audit signal de commande, être commutée activement par l'appareil ménager d'une condition ambiante hermétique à une condition ambiante non hermétique ou vice versa en commandant un actionneur ou un moteur qui est prévu pour déplacer la porte ou le volet (16) de l'enceinte (20) de meuble.

14. Procédé d'exploitation d'un appareil ménager (10), en particulier un four, une table de cuisson, un réfrigérateur, un congélateur, un lave-vaisselle, un lave-linge ou un sèche-linge à tambour, comportant une unité de commande et un moyen (18) servant à détecter une condition ambiante à l'extérieur de l'appareil ménager, le moyen étant relié en communication de signaux à l'unité de commande,
**caractérisé en ce que** le procédé comporte les étapes suivantes :
ledit moyen (18) servant à détecter une condition ambiante détecte si l'appareil ménager est dans une condition ambiante hermétique, dans une condition ambiante non hermétique, ou dans un état de transition d'une condition ambiante non hermétique à une condition ambiante hermétique, et communique ladite condition ambiante hermétique ou non hermétique ou ledit état de transition à l'unité de commande et l'unité de commande fait passer l'appareil ménager (10) d'un mode de fonctionnement en marche à un deuxième mode de fonctionnement, où une émission de chaleur de l'appareil (10) est réduite en comparaison du mode de fonctionnement en marche ou l'unité de commande démarre l'appareil ménager (10) dans ledit deuxième mode de fonctionnement et l'unité de commande délivre un signal d'alarme à un utilisateur de l'appareil ménager, lorsqu'une condition ambiante hermétique ou un état de transition d'une condition ambiante non hermétique à une condition ambiante hermétique est détecté(e) par ledit moyen (18) servant à détecter une condition ambiante,
la condition ambiante hermétique étant définie par une enceinte (20) de meuble où l'appareil (10) est disposé et qui comporte une porte ou un volet (16) qui peut être ouvert(e) pour donner accès à l'appareil ménager (10) et fermé(e) pour cacher l'appareil ménager (10) à l'intérieur de ladite enceinte (20) de meuble, dans lequel, dans la condition ambiante hermétique, la porte ou le volet (16) de l'enceinte (20) de meuble est dans un état fermé, dans la condition ambiante non hermétique, la porte ou le volet (16) de l'enceinte (20) de meuble est dans un état ouvert, et dans l'état de transition, la porte (16) ou le volet de l'enceinte (20) de meuble est en mouvement d'un état ouvert vers un état fermé ou est arrêté(e) entre ces deux états.

15. Procédé selon la revendication 14, **caractérisé en ce qu'**un système de ventilation ou un système de refroidissement de l'appareil ménager (10) qui est actionné pendant au moins une partie du mode de fonctionnement en marche de l'appareil ménager (10) est encore en marche pendant au moins une partie du deuxième mode de fonctionnement, l'unité de commande de l'appareil ménager (10) contrôlant et/ou vérifiant de préférence si une condition ambiante hermétique détectée est présente pendant au moins une période minimale prédéfinie avant le passage de l'appareil ménager (10) dans le deuxième mode de fonctionnement.
